# EUROPEAN PATENT SPECIFICATION

(11) **EP 3 243 644 B1**
(45) Date of publication and mention of the grant of the patent: **07.07.2021**
(21) Application number: 16397515.4
(22) Date of filing: 12.05.2016
(51) Int. Cl.: B29D 30/30, B60C 9/07, B60C 9/09, B60C 15/00

(54) **A TYRE AND A METHOD FOR MANUFACTURING AN ANNULAR CARCASS FOR A TYRE**
REIFEN UND VERFAHREN ZUM HERSTELLEN EINER RINGFÖRMIGEN KARKASSE FÜR EINEN REIFEN
PNEUMATIQUE ET PROCÉDÉ DE FABRICATION D'UNE CARCASSE ANNULAIRE POUR UN PNEU

(43) Date of publication of application: 15.11.2017
(73) Proprietor: Nokian Renkaat Oyj, 37101 Nokia (FI)
(72) Inventor: YLITALO, Reijo, 33250 Tampere (FI)
(74) Representative: Berggren Oy

(56) References cited:
- EP-A1- 2 050 585
- EP-A1- 2 735 435
- WO-A2-2014/135995
- GB-A- 1 589 578
- US-A- 2 874 747
- US-A- 2 971 553
- US-A- 3 580 318
- US-A1- 2002 046 796
- US-A1- 2011 017 379

## Description

### Technical field

The invention relates to a method for manufacturing an annular carcass of a tyre and to a tyre.

### Background

Pneumatic tyres are commonly used in vehicles. Quality of a tyre may be characterised by several factors, including roll resistance, resistance to wear, endurance in general, ability to handle, and aquaplaning, to name a few. Some of these properties may be improved by using certain types of rubber material, reinforcement structures and/or tread patterns.

Tires are known e.g. from documents US2002/0046796, US2874747,

US2003/0173013, US2009/0005481 and US2011/0017379. The document US2002/0046796 discloses a carcass ply producing apparatus for producing a carcass ply constituting a carcass layer of a tire. When a ply cord is supplied along the widthwise direction of the carcass ply, a disposition angle of the ply cord with respect to the longitudinal direction can be changed. The document US2874747 discloses a pneumatic tire construction with improved ride characteristics. Therein rings of relatively soft rubber are positioned just inwardly of the bead wires, in order to allow a cord to take up tension upon inflation of the tire. The document US2011/0017379 discloses an airplane tire for use with an inflation pressure of at least 9 bar.

### Summary

It has been found that many properties, including handling, roll resistance, and endurance, may be improved by stiffening the sidewalls and/or the bead areas of the tyre. Moreover, it has been found that such stiffening may be obtained by arranging the layers of plies in a manner that stiffens these areas. In particular, the plies commonly have a reinforcing cords. By arranging the plies in such a way that, in the bead area, each ply is arranged cross-wise with respect to its neighbouring plies (or a neighbouring ply, when considering the innermost or outermost layer), the layers form a stiff structure at the sidewall. Moreover, the size of such a region should be reasonably large to stiffen the tyre. Moreover, in order to have this region reasonable large and simultaneously using only a relatively small amount of raw materials, the material sizes and locations are specifically selected for the tyre and in a corresponding method for manufacturing.

A method for manufacturing a tyre is disclosed in the independent claim 1. A tyre is disclosed in the independent claim 7.

Preferably embodiments have been disclosed in the dependent claims 2 to 6 and 8-11.

### Brief description of the drawings

- Fig. 1: shows half of a cross section of a tyre, wherein the cross-sectional plane comprises the axis of rotation of the tyre,
- Figs. 2a1 and 2a2: show winding ply materials onto a carcass drum,
- Fig. 2b: shows a tubular carcass on the carcass drum,
- Fig. 2c: shows a cross section of the tubular carcass,
- Fig. 2d: shows an annular carcass formed by expanding the tubular carcass on the carcass drum, and an annular belt structure on the annular carcass,
- Fig. 2e: shows a cross section of another tubular carcass not according to the invention,
- Fig. 3a: shows a bead area and a sidewall of a tyre or an annular carcass according to an embodiment of the invention,
- Fig. 3b: shows a bead area and a sidewall of a tyre or an annular carcass of a comparative example,
- Fig. 3c: shows cords of two neighbouring ply layers in a bead area and the sidewall,
- Fig. 4a: shows a tyre and cords of different plies therein, as seen from above,
- Fig. 4b: shows the mutual arrangement of ply materials during manufacturing of a tyre with two layers of ply material,
- Fig. 4c: shows the mutual arrangement of ply materials during manufacturing of a tyre with three layers of ply material (not according to the invention),
- Fig. 5a: shows a bead area and a sidewall of a tyre or an annular carcass with three plies (not according to the invention),
- Fig. 5b: shows a bead area and a sidewall of another tyre or another annular carcass with three plies (not according to the invention), and
- Fig. 6: shows a bead area and a sidewall of a tyre or an annular carcass with four plies (not according to the invention).

### Detailed description

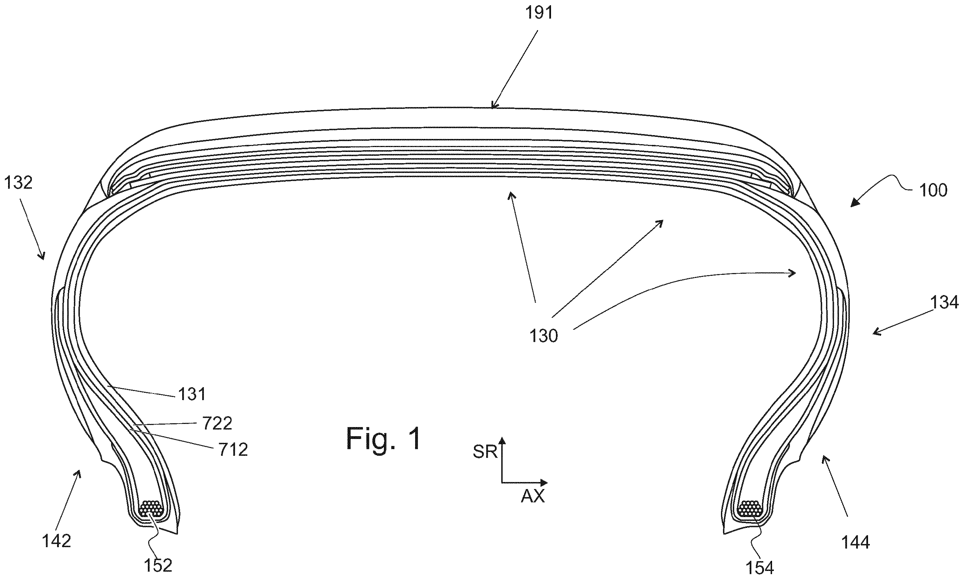

Fig. 1 shows a cross section of a tyre 100. The tyre comprises a carcass 130 having plies 712, 722, and a tyre tread radially surrounding the carcass. The carcass 130 comprises, as an innermost layer, an innerliner 131, typically made of only a polymer. In contrast to the innerliner 131, which is free from cords, the plies 712, 722 comprise cords, as will be detailed below. The tread is arranged to make a rolling contact with ground while driving. The centre of the tyre tread is commonly referred to as the crown area 191.

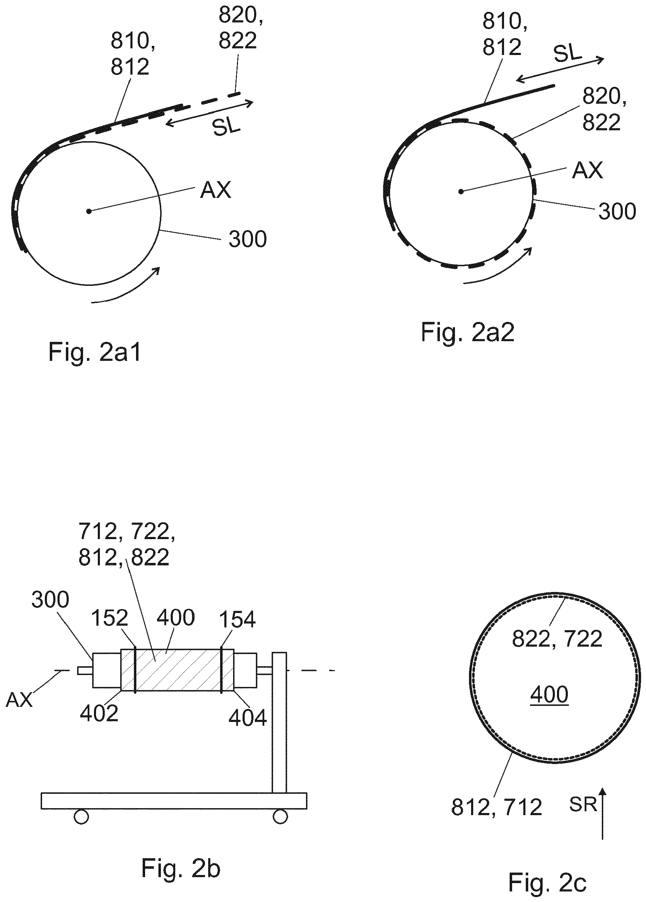

Referring to Figs. 2a1 and 2a2, a pneumatic tyre 100 is commonly manufactured by winding first and second ply materials 812 and 822 onto a carcass drum 300 to form the first and second plies 712 and 722, respectively. As indicated in Fig. 2a1, the first ply material 812 and the second ply material 822 may be wound substantially simultaneously. As indicated in Fig. 2a2, the first ply material 812 may be wound onto the and the second ply material 822 after winding the second ply material 822. By said winding, a tubular carcass preform 400 is formed, as indicated in Fig. 2b.

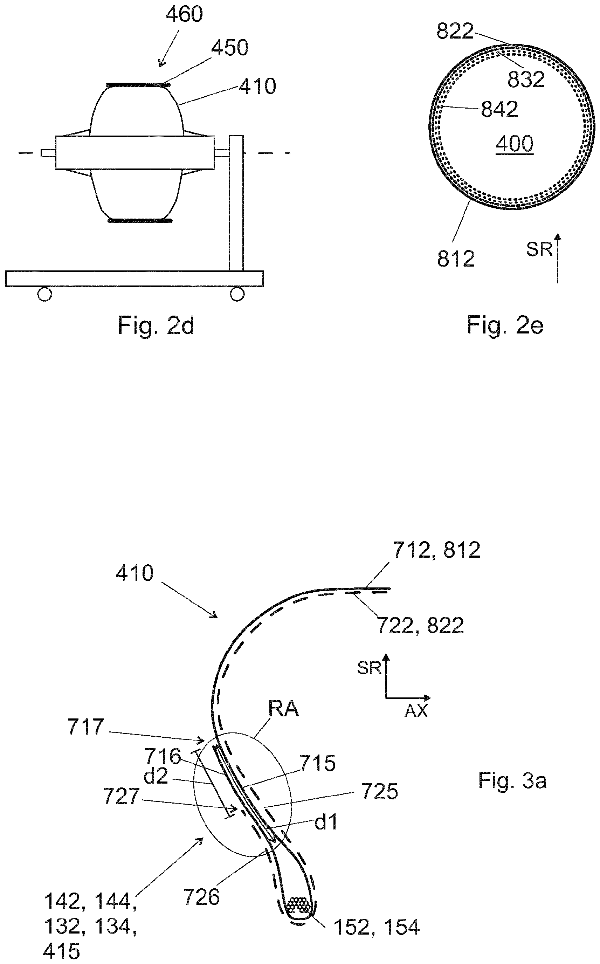

Referring to Figs. 2b to 2d, two cables 152, 154 are arranged onto the tubular carcass preform 400, and the parts of the tubular carcass preform 400 that are left in between a boundary 402, 404 of the tubular carcass preform 400 and the one of the two cables 152, 154 that is closer to the corresponding boundary 402, 404 of the tubular carcass preform are turned about the closer cable 152, 154 onto the part of the tubular carcass preform 400 that is left in between the two cables 152, 154. Thereafter, the tubular carcass preform 400 is expanded to form an annular carcass 410 (Fig. 2d). An annular belt 450 can be arranged onto the annular carcass 410 to form a preform 460 for a tyre 100 (often referred to as a green tyre). By curing the preform 460 for a tyre, a pneumatic tyre 100 can be manufactured, as known to a skilled person.

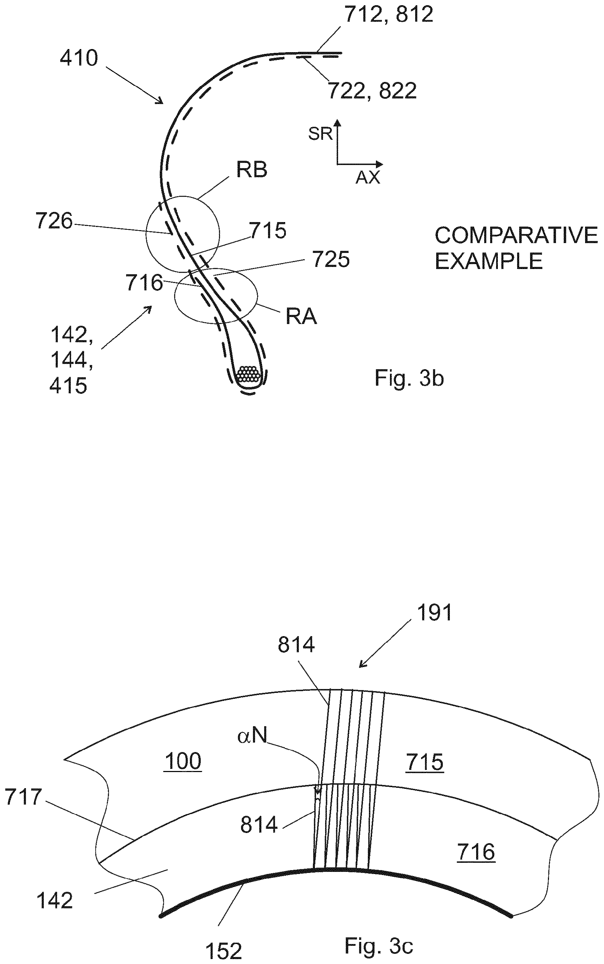

Typically, the plies 712, 722 comprise cords extending in a direction forming a small angle with the direction of axis of rotation AX. Moreover, typically the cords of adjacent plies are crossed. Referring to Fig. 3b, a comparative example comprises a wide second ply 722 and a narrow first ply 712, the first ply 712 being arranged, in the tyre, at the crown area 191 (see Fig. 1) outwards from the second ply 722. Thus, the bead area 415 includes a region "RA" having an inner 715 and an outer 716 layer of the first ply material 812 and an inner 725 and an outer 726 layer of the second ply material 822. In addition, the bead area 415 includes a region "RB" having only an inner 715 layer of the first ply material 812 and an inner 725 and an outer 726 layer of the second ply material 822. However, because of the crossing direction of the cords of different plies, in the region "RB", the cords of the outer layer 726 of the second ply material 822 are substantially parallel with the cords of the inner layer 715 of the first ply material 812. Only in the region "RA", the cords of the inner 715 and outer 716 layer of the first ply material 812 are crossed relative to each other. Herein, the reference 415 refers to a bead area of a carcass 410, while the references 142, 144 refer to the bead area of a tyre.

It has been found that because of this crossing of cords, the region "RA" is stronger that the region "RB". Therefore, in an embodiment, the size of the region "RA" is made large in comparison with the size of the region "RB". In particular in an embodiment, the region "RB" is completely dispensed with.

Referring to Fig. 3a, in an embodiment, the outer layer 716 of the first ply material 812 extends, at a bead area 142, 144, 415 along a sidewall 132, 134 of a pneumatic tyre 100 (or carcass 410) in the outward radial direction +SR, from a boundary 727 of the outer layer 726 of the second ply material 822. In such an embodiment, the region "RB" is completely dispensed with, and the cords of all the plies are arranged cross-wise relative to the cords of all neighbouring plies (one or two, depending on which ply is considered at which location). As a result, the carcass 130 is stiffer, compared to a tyre of a comparative example of Fig. 3b, wherein substantially same amount of materials are used. This improves many properties of a tyre, including handling, roll resistance, and endurance. In particular, by such an arrangement, the stiffness of the tyre increases, whereby the tyre has better driving characteristics and improved wear resistance in general.

This concept is reflected both in a method for manufacturing a part of a tyre (and optionally also the whole tyre), as well as in the resulting tyre itself and/or its intermediated products.

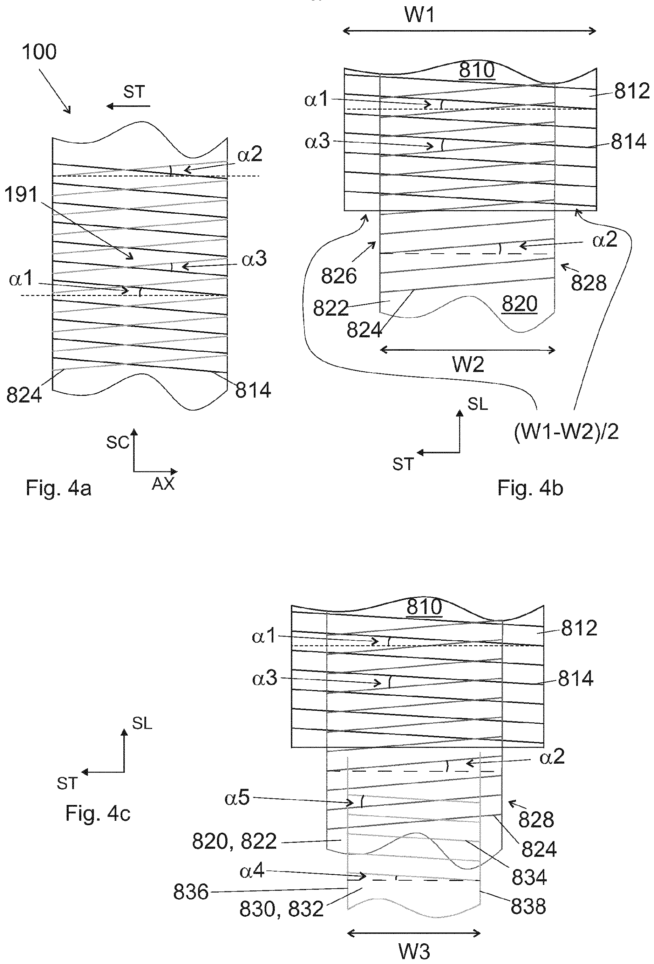

Figs. 2a1, 2a2, and 2b to 2d show an embodiment of a method for manufacturing an annular carcass 410 of a pneumatic tyre 100. Figs. 4a and 4b further clarifies the method. With reference to these figures, the method comprises providing a first web 810 of a first ply material 812, the first web 810 extending in a longitudinal direction SL, having a first width W1 in a transversal direction ST perpendicular to the longitudinal direction SL, and comprising first cords 814 extending in a direction forming a first angle α1 of more than 0 degrees and at most 10 degrees with the transversal direction ST. The first angle α1 may be e.g. from 0.5 to 5 degrees, such as from 1 to 3 degrees. The method comprises providing a second web 820 of a second ply material 822, the second web extending in the longitudinal direction SL, having a second width W2 in the transversal direction ST, and comprising second cords 824 extending in a direction forming a second angle α2 of more than 0 degrees and at most 10 degrees with the transversal direction ST. The second angle α2 may be e.g. from 0.5 to 5 degrees, such as from 1 to 3 degrees. The term "web" here refers to rollable (i.e. windable) material; the cords of the material 812 no not necessarily form a network.

To dispense with the region "RB" (see above) of the bead area, the second width W2, i.e. the width of the web 820 of the second ply material 822 is less than the first width W1, i.e. the width of the web 810 of the first ply material 812 (i.e. W2 < W1; see Fig. 4b). In an embodiment, the width of the second ply material 822 (i.e. the second width W2, Fig. 3b) is at least 10 mm less than width of the first ply material 812 (i.e. the first width W1). In other words, in an embodiment, W1-W2 ≥ 10 mm. This difference also affects the rigidity of the bead area 142, 144 of the pneumatic tyre 100. Thus, preferably, W1-W2 ≥ 20 mm or W1-W2 ≥ 30 mm.

Referring to Figs. 2a1 and 2a2, an embodiment comprises winding at least a layer of the first ply material 812 and a layer of the second ply material 822 onto a carcass drum 300 such that the transversal direction ST is parallel to the axis of rotation AX of the tyre drum 300. Moreover, to dispense with the region "RB" (of Fig. 3b), the first ply material 812 radially surrounds the second ply material 822. Furthermore, to increase the strength, the plies is arranged cross-wise with respect to each other. In other words and with reference to Figs. 4a and 4b, in a location, the direction to which the second cords 824 of the second ply material 822 extend form a third angle α3 with the direction to which the first cords 814 of the first ply material 812 extend, wherein the third angle α3 is greater than the second angle α2. Moreover, with reference to Fig. 4b, in the direction of the axis of rotation AX (which is parallel to the transversal direction ST), on both sides, the first ply material 812 extends in the direction of the axis of rotation AX outwardly from a boundary 826, 828 of the second ply material 222.

Referring to Figs. 2b and 2c, by said winding, a tubular carcass preform 400 is manufactured. Fig. 2c indicates, how the first ply material 812 radially surrounds the second ply material 822. In an embodiment, the first ply material 812 is next to the second ply material 822 in the radial direction at the crown area 191. In an embodiment, the first ply material 812 is in contact with the second ply material 822 in such a way that no other material that comprises cords, e.g. other ply material, is arranged in between first ply material 812 and the second ply material 822.

Referring to Figs. 2a1 and 2a2, the ply materials 812, 822 may be wound in sequence in such a way that the second ply material 822 is wound first, and the first ply material 812 is wound onto the second ply material. In the alternative, both the ply materials may be wound at the same time as a layer comprising both the ply materials. After winding the material, two cables 152, 154 are arranged onto the tubular carcass preform 400.

As indicated above, the ply materials may be provided in the form of a single web, or a web for each ply material, from which pieces of suitable length are cut. In the alternative, the ply material may be provided in the form of pre-cut sheets. In both cases, in tubular carcass preform 400, the first ply material 812 radially surrounds in all locations of the second ply material 822 as indicated in Figs. 2b and 2c.

The first ply material 812 comprises rubber as a matrix material and first cords 814 integrated with the matrix. The first cords 814 may comprise at least one of cotton, rayon, polyamide (Nylon), polyester, polyethylene terephthalate, and Poly-paraphenylene terephthalamide (Kevlar). The cords reinforce the ply.

The second ply material 822 comprises rubber as a matrix material and the second cords 824 integrated with the matrix. The second cords may comprise at least one of cotton, rayon, polyamide (Nylon), polyester, polyethylene terephthalate, and Poly-paraphenylene terephthalamide (Kevlar). The second cords 824 may be made of from the same material as the first cords 814. The rubber of the second ply material 822 may be the same as the rubber of the first ply material 812.

The part of the tubular carcass preform 400 that is left in between a boundary 402 of the tubular carcass preform 400 and the one 152 of the two cables 152, 154 that is closer to the boundary 402 of the tubular carcass preform is turned about the closer cable 152 onto the part of the tubular carcass preform 400 that is left in between the two cables 152, 154. In this way, the bead area 415 (corresponding to bead area 142 of Figs. 3a and 1) is formed. Also the part the part of the tubular carcass preform 400 that is left in between a boundary 404 of the tubular carcass preform 400 and the one 154 of the two cables 152, 154 that is closer to the boundary 404 of the tubular carcass preform is turned about the closer cable 154 onto the part of the tubular carcass preform 400 that is left in between the two cables 152, 154. In this way, another bead area 415 (corresponding to the area 144 of Fig. 1) is formed. Referring to Fig. 2d, the tubular carcass preform 400 is expanded to form an annular carcass 410.

The tubular carcass preform 400 may be expanded before the boundary parts of the tubular carcass preform 400 are turned. In the alternative, the tubular carcass preform 400 may be expanded after the boundary parts of the tubular carcass preform 400 are turned. In the alternative, the tubular carcass preform 400 may be expanded substantially simultaneously with the turning of the boundary parts of the tubular carcass preform 400.

Fig. 3a shows a part of an annular carcass 410 manufactured in this way. The carcass 410 of Fig. 3a comprises, in a bead area 415, an inner 715 and an outer 716 layer of the first ply material 812 and an inner 725 and an outer 726 layer of the second ply material 822.

Referring to Fig. 3a, an embodiment comprises using a first ply material 812 having such a width W1 that, in the annular carcass 410, the inner layer 715 of the first ply material 812 makes a contact with an outer layer 716 of the first ply material 812 at all locations of a region RA. Moreover, the first ply material encircles a cable 152. In an embodiment, the region RA extends a first distance d1 along the cylindrical carcass preform 400 in a substantially radial direction, and the first distance d1 is at least 5 mm. The distance may be e.g. at least 10 mm or at least 15 mm. These values ensure a reasonable amount of cords crossing each other at the sidewall of the tyre.

Referring to Fig. 3a, in an embodiment, at a sidewall 132, 133 of a tyre 100, the inner 715 layer of the first ply material 812 makes a contact with an outer 716 layer of the first ply material 812 at each point of an area RA. In an embodiment, the area RA extends in a substantially radial direction a first distance d1. The first distance d1 may be e.g. at least 5 mm, at least 10 mm, or at least 15 mm.

A pneumatic tyre 100 can be made using the annular carcass 410. Referring to Fig. 2d, in an embodiment, an annular belt structure 450 is arranged onto the carcass 410 to form a preform 460 for a tyre. Moreover, as known to a skilled person, the preform 460 for a tyre is cured to form the pneumatic tyre 100 using a curing temperature and time known per se.

A part of a cross section of a pneumatic tyre is shown in Fig. 1. A pneumatic tyre 100 according to an embodiment of the invention can be (and has been) manufactured by the aforementioned method. Referring to Fig. 1, such a tyre 100 has a crown area 191, sidewalls 132, 134, and bead areas 142, 144. As indicated in Fig. 1, the pneumatic tyre 100 comprises a carcass 130. While the carcass 130 of the pneumatic tyre 100 has been cured, the annular carcass 410 is not cured before curing. The carcass 130 of the tyre is made by forming the annular carcass 410 as discussed above, and curing. As indicated above, the pneumatic tyre 100 has the bead area 415 of a corresponding carcass 130, 410. While driving, the tyre 100 is configured to rotate about an axis of rotation AX.

The carcass 130 of the tyre 100 comprises a first ply 712 of first ply material 812 and a second ply 722 of second ply material 822 in such a way, that in the crown area 191, the first ply material 812 radially surrounds the second ply material 822. In the radial direction, the first ply material 812 is next to the second ply material 822. The crown area 191 is depicted in Figs. 1 and 4a. Figs. 2c and 2e indicate, how the different ply materials 812, 822, 832, and 842 may surround each other in the carcass preform 400 or in the crown area 191 of the tyre 100. The crown area 191 of the tyre 100 is arranged to make a rolling contact with ground while driving.

The first ply material 812 comprises first cords 814 extending within the first ply material 812 in a first direction that depends on a location within the tyre 100. At a point of the crown area 191, the first direction forms a first angle α1 with the direction of the axis of rotation AX, as indicated in Fig. 4a. The second ply material 822 comprises second cords 824 extending within the second ply material 822 in a second direction that depends on a location within the tyre 100. At the point of the crown area 191, the second direction forms a second angle α2 with the direction of the axis of rotation AX and a third angle α3 with the direction to which the first cords 814 of the first ply material 812 extend at that point. As is implicit, the point refers to a point of the crow area 191 wherein projections of the first cords and projections of the second cords 824 cross each other, when projected onto the surface of the tyre in a radial direction of the tyre.

The first angle α1 is more than 0 degrees and at most 10 degrees. The second angle α2 is more than 0 degrees and at most 10 degrees. Other preferable values for the angles are indicated above. Moreover, the cords are arranged cross-wise relative to each other, i.e. the third angle α3 is greater than the second angle α2.

In an embodiment of a tyre 100, the material of the first ply 812 comprises rubber and first cords 814. In an embodiment, the first cords 814 comprise at least one of cotton, rayon, polyamide (Nylon), polyester, polyethylene terephthalate, and Poly-paraphenylene terephthalamide (Kevlar). In an embodiment of a tyre, the material of the second ply 822 comprises rubber and second cords 824. In an embodiment, the second cords 824 comprise at least one of cotton, rayon, polyamide (Nylon), polyester, polyethylene terephthalate, and Poly-paraphenylene terephthalamide (Kevlar). The second cords 824 may be made of from the same material as the first cords 814. The rubber of the material 822 of the second ply 822 may be the same as the rubber of the material of the first ply 712.

The tyre comprises a first cable 152 arranged in a first bead area 142. The tyre comprises a second cable 154 arranged in a second bead area 144.

Referring to Fig. 3a, in an embodiment, at a sidewall 132 of the tyre 100, the inner 715 layer of the first ply material 812 makes a contact with an outer 716 layer of the first ply material 812 at each point of an area RA, wherein the area RA extends along bead area 142, 144 substantially radially a first distance d1, and the first distance d1 is at least 5 mm. The term "substantially radially" refer to a direction that is parallel to a direction of the bead area 142, 144, and forms smallest angle with the outward radial direction +SR. The first distance d1 may be at least 10 mm or at least 15 mm. When the inner 715 layer of the first ply material 812 makes a contact with the outer 716 layer of the first ply material 812, no other material that comprising cords, e.g. other ply material, is left in between the inner and outer layers (715, 716).

Preferably, at the area RA, no material is left in between the inner and outer layers (715, 716).

Referring to Fig. 3a, in both of the bead areas 142, 144, the tyre 100 comprises (i) an inner layer 715 of the first ply material 812, (ii) an outer layer 716 layer of the first ply material 812, (iii) an inner 725 layer of the second ply material 822, and (iv) an outer 726 layer of the second ply material 822. As indicated above, the materials and their sizes are selected in such a way that the outer layer 716 of the first ply material 812 extends, along a sidewall 132, 134 in a substantially outward radial direction +SR, from a boundary 727 of the outer layer 726 of the second ply material 822. The term "a substantially outward radial direction" refer to a direction that is parallel to a direction of the sidewall 132, 134 and forms smallest angle with the outward radial direction +SR.

Referring to Fig. 3a, the outer layer 716 of the first ply material 812 extends a second distance d2 from the boundary 727 of the outer layer 726 of the second ply material 822 along a sidewall 132 in a substantially outward radial direction +SR. This second distance d2 may be substantially equal to half of the difference of the widths, i.e. (W1-W2)/2. As indicated in this way, d2 may be e.g. at least 2 mm, at least 5 mm, at least 10 mm or at least 15 mm.

The strengthening effect of the cross-wise cords of the plies, also at the bead areas 142, 144, 415, may be observed at least when no other cord-comprising material is arranged in between the inner 715 and outer 716 layers of the first ply material 812 (see Fig. 3a). Thus, in an embodiment no such material that comprises cords (e.g. second ply material 822 or other) is arranged in between the inner layer 715 of first ply material 812 and the outer layer 716 of first ply material 812 in the bead area 142, 144, 415.

As evident from the discussion above, the plies extend from the outer side of the carcass 130, via a first cable 152 to the crow area 191, and further via a second cable 154 to the opposite outer side of the carcass 130. Preferably the plies extend continuously, i.e. each one of the plies 810, 820 is an integrated piece of material. As the plies extend in such a manner, in an embodiment the first ply 712 (and first ply material 812) encircles a first cable 152 and a second cable 154. In an embodiment, where the inner 715 and outer 716 layers of the first ply material are in contact, the first ply 712 (and first ply material 812) fully encircles the first cable 152 and the second cable 154. In an embodiment, the first ply 712 (and first ply material 812) extends continuously in between the cables 152, 154.

In the embodiment, also the second ply 722 and second ply material 822 encircles the first cable 152 and the second cable 154. Moreover, the second ply 722 and second ply material 822 encircles the first ply material 812 that is left in between the cable(s) and the second ply. However, since the layers 715, 716 of the first ply material 812 are left in between the layers 725, 726 of the second ply material 822, the second ply 722 and second ply material 822 only partly encircle the cables 152, 154. However, the second ply 722 and second ply material 822 encircle by at least 270 degrees each of the cables 152, 154, when the amount of encircling is observed from a cross section of the tyre 100 or the annular carcass 410 with a plane including the axis of rotation AX (see Fig. 3a). In Fig. 3a, the second ply 722 and second ply material 822 encircles by about 350 degrees the cable 152 (and also the other cable 154, even if not shown in the figure).

As indicated in Fig. 3a, preferably the plies are turned onto the outer side of the carcass 410 or tubular carcass 400. Correspondingly, in an embodiment, the boundary 717 of the first ply material 110 and the boundary 727 of the second ply material 120 are left on the outer side of the carcass 130 or annular carcass 410, as depicted in Fig. 3a. Correspondingly, on the opposite side of the tyre 100 or the annular carcass 410, also the other boundaries of the ply materials are left on the outer side of the carcass 130, as depicted in Fig. 3a. As indicated in Fig. 1, an innerliner 131 may be arranged on the inner side of the carcass 130.

One feature strengthening the tyre is that the cords of all neighbouring ply layers extend cross-wise with respect to each other at all locations (compare Figs. 3a and 3b). Neighbouring layers refer to the layers of the laminate that are in contact with each other without any other layers of ply material in between them. Referring to Fig. 3a, a bead area (or a tyre 100 or a carcass 410) comprises layers or ply material. At a location, one of these layers is outermost and one is innermost. E.g. at a location, the layer 726 is the outermost layer, while the layer 725 is the innermost layer. At another location, that is free from the outer layer 726, the layer 716 is the outermost layer. Still further, another location, that is free from both the outer layers 726 and 716, the layer 715 is the outermost layer. Such outermost and innermost layers comprise only one neighbouring ply. In addition, some of the layers are intermediate layers in the sense that they comprise two neighbouring layers. Depending on location, in Fig. 3a, (i) the layers 715 and 716 or (ii) only 715, or (iii) none of the layers, may be seen as an intermediate layer.

In an embodiment, at all locations of the bead area 142, 144, 415, each one of the outermost or innermost layers 726, 716, 715, 725 of ply material 212, 222 comprises cords extending in a direction that forms an angle αN with the direction to which the cords of the neighbouring layer (716, 715, 725, 715, respectively) extend. As indicated above, depending on the location, the layer 716 may be seen as an outermost layer or an intermediate layer. For example, in Fig. 3c, when considering the layer 716 as an outermost layer, the cords 814 therein extend in a direction forming an angle of αN with the direction to which the cords 814 of the neighbouring layer 715 extend. The angle αN is more than zero degrees. The angle αN may be e.g. at least 0.5 degrees or at least 1 degree for each pair of layers.

In an embodiment, at all locations of the bead area 142, 144, 415, each one of the intermediate layers 716, 715 of ply material 812 comprises cords extending in a direction that (i) forms an angle αN with the direction to which the cords of a first neighbouring layer (726, 716, respectively) extend and (ii) forms another angle with the direction to which the cords of a second neighbouring layer (715, 725, respectively) extend. For example, in Fig. 3c, when considering the layer 716 as an intermediate layer, the cords 814 therein extend in a direction forming an angle with the direction to which the cords 814 of the neighbouring layer 715 extend. However, at that point, the intermediate layer 716 has also another neighbouring layer, namely the layer 726, as indicated in Fig. 3a. The direction in which the cords 814 of the intermediate layer extend form another angle with the direction to which the cords 824 (see Fig. 4b) of the neighbouring layer 716 extend. To have a proper reinforcing effect of the cords, both the aforementioned angles are more than zero degrees. In an embodiment, both the aforementioned angles are at least 0.5 degrees or at least 1 degree.

As indicated in the Figures, at each location of the carcass 410, in the direction of the thickness of the carcass 410 the carcass 410 comprises layers 715, 716, 725, 726 of ply material. As indicated in the Figures, the layers may comprise only one or two neighbouring layers.

As indicated in particular in Figs. 3a,5a, and 6, in a preferable embodiment the cords of each such layer (725, 726) of ply material that has only one neighbouring layer (715, 716) of ply material comprises first cords extending, at a location, within the layer (725, 726) in a first direction. Moreover, the cords of a neighbouring layer of the layer (725, 726) of ply material comprises second cords extending, at the location, within the neighbouring layer in a second direction. The second direction forms and angle with the first direction. The angle is preferably at least 0.5 degrees or at least 1 degree.

As indicated in particular in Figs. 3a,5a, and 6, in the preferable embodiment the cords each such layer (715, 716) of ply material that has only two neighbouring layers of ply material comprises first cords extending, at a location, within first ply material of the layer (715, 716) in a first direction. In Fig. 3a the layers 716 and 725 are neighbouring the layer 715; and the layers 726 and 715 are neighbouring the layer 716. This applies in particular at a sidewall 132, preferably at both sidewalls 132, 134, of the carcass.

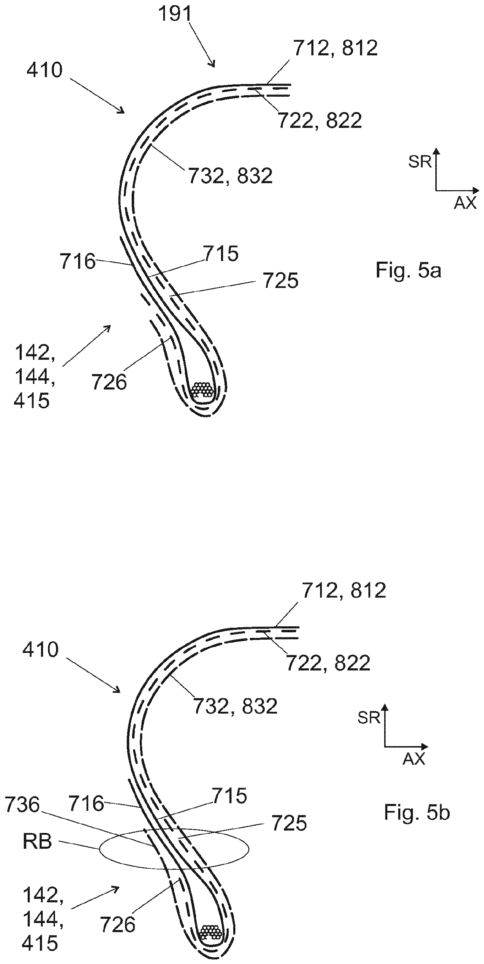

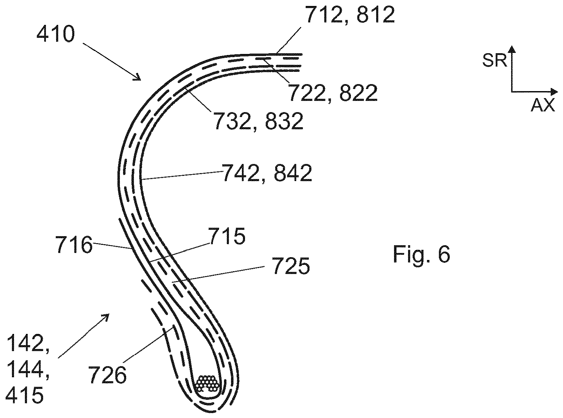

Considering only the layer 715, the cords of a first neighbouring layer 716 of the layer 715 of ply material comprises second cords extending, at the location, within the first neighbouring layer in a second direction. Furthermore, the cords of a second neighbouring layer 725 of the layer 715 of ply material comprises third cords extending, at the location, within the second neighbouring layer in a third direction. As indicated in Fig. 3a, at that location, the layer 715 of ply material is arranged, in between the first neighbouring layer 716 and the second neighbouring layer 725. Furthermore, the second direction forms and angle with the first direction; the angle being e.g. at least 0.5 degrees or at least 1 degree. Furthermore, the third direction forms and angle with the first direction; the angle being e.g. at least 0.5 degrees or at least 1 degree. This applies in particular at a sidewall 132, preferably at both sidewalls 132, 134, of the carcass. In addition to Fig. 3a, such embodiments are also depicted in Figs. 5a and 6.

Referring to Fig. 5a, a tyre 100 and/or an annular carcass not according to the invention may comprise further plies, in particular, a third ply 732 of third ply material 832. Without loss of generality, the first ply 712 may refer to the ply that is, the crow area 191, radially the outermost ply. The second ply 722 may be the one neighbouring the first ply 712. The third ply 732 may be the one neighbouring the second ply 722 radially closer to an axis of rotation than the second ply 722.

Referring also to Fig. 4c, an example, not according to the invention, comprises providing a third web 830 of a third ply material 832, the third web extending in the longitudinal direction SL, having a third width W3 in the transversal direction ST, and comprising third cords 834 extending in a direction forming a fourth angle α4 of at most 10 degrees with the transversal direction ST. The embodiment comprises winding also at least a layer of the third ply material 832 onto the carcass drum 300 such that
- the transversal direction ST is parallel to the axis of rotation AX of the carcass drum 300,
- the second ply material 822 radially surrounds the third ply material 832,
- in a location, the direction to which the third cords 834 of the third ply material 832 extend forms a fifth angle α5 with the direction to which the second cords 824 of the second ply material 822 extend, wherein the fifth angle α5 is greater than the fourth angle α4.

As indicated in Fig. 4c, in the example, on both sides of the third web 830, the second ply material 822 extends in the direction of the axis of rotation AX outwardly from a boundary (836, 838) of the third ply material 832. Moreover, in an embodiment, the second ply material 822 is next to the third ply material 832 in the radial direction.

Referring to Fig. 5a, if a third ply 732 is used, preferably the width W3 of the web of sheet, from which the third ply is manufactured, is even smaller than the width W2 of the web of sheet, from which the second ply 722 is manufactured. This ensures that the cords of all layers are arranged in a mutually cross-wise manner also at the bead areas, and in particular at all points of the bead area. In an embodiment, the third width is at least 5 mm or at least 10 mm less than the second width W2, i.e. W2-W3 ≥ 5 mm or W2-W3 ≥ 10 mm.

Referring to Figs. 4c and 5a, in an example, not according to the invention, the carcass further comprises third ply material 832 in such a way, that in the crown area 191, the second ply material 822 radially surrounds the third ply material 832 (see Fig. 5a). Moreover, the third ply material 832 comprises third cords 834 extending within the third ply material 832 in a third direction that depends on a location within the tyre 100. And in the crow area 191, the third direction forms a fourth angle α4 with the direction of the axis of rotation AX and a fifth angle α5 with the direction to which the second cords 824 of the second ply material 822 extend at that location. The fourth angle α4 is at most 10 degrees and the fifth angle α5 is greater than the fourth angle α4. The fourth angle α4 may be e.g. from 0.5 to 5 degrees, such as from 1 to 3 degrees.

The third ply material 832 is arranged, in the radial direction, next to the second ply material 822. Thus, no such material that comprises cords, such as other ply material, is arranged in between the third ply material 832 and the second ply material 822.

The third ply material 832 comprises rubber as a matrix material and the third cords 834 integrated with the matrix. The third cords may comprise at least one of cotton, rayon, polyamide (Nylon), polyester, polyethylene terephthalate, and Poly-paraphenylene terephthalamide (Kevlar). The third cords 834 may be made of from the same material as the second cords 824. The rubber of the third ply material 832 may be the same as the rubber of the second ply material 822.

With reference to Fig. 5b, not according to the invention, should a wider web or sheet be used for the third ply, a region of the type "RB" (as indicated in the figure with the reference "RB") might be formed. In such a region, the cords of two of the neighbouring layers would extend substantially in parallel. In particular, the cords of the outer layer 736 of the material of the third ply 530 could be substantially parallel with the cords of outer layer 716 of the material of the first ply 712.

Referring to Fig. 6, a tyre 100 and/or an annular carcass not according to the invention may comprise further plies, in particular, a fourth ply 742 of fourth ply material 842. The fourth ply 742 may be the one neighbouring the third ply 732 radially closer to an axis of rotation than the third ply 732. Referring to Fig. 6, if a fourth ply 742 is used, preferably the width of the web of sheet, from which the fourth ply is manufactured, is smaller than the width W3 of the web or sheet, from which the third ply 732 is manufactured. Moreover, preferably the width W3 of the web or sheet, from which the third ply 732 is manufactured, is even smaller than the width W2 of the web of sheet, from which the second ply 722 is manufactured. This ensures that the cords of all layers are arranged in a mutually cross-wise manner at all locations of the tyre.

## Claims

1. A method for manufacturing an annular carcass (410) of a tyre (100), the method comprising
- providing first ply material (812), the first ply material (812) extending in a longitudinal direction (SL), having a first width (W1) in a transversal direction (ST) perpendicular to the longitudinal direction (SL), and comprising first cords (814) extending in a direction forming a first angle (α1) of at most 10 degrees with the transversal direction (ST),
- providing second ply material (822) next to the first ply material (812), the second ply material (822) extending in the longitudinal direction (SL), having a second width (W2) in the transversal direction (ST), and comprising second cords (824) extending in a direction forming a second angle (α2) of at most 10 degrees with the transversal direction (ST),
- winding at least a layer of the first ply material (812) and a layer of the second ply material (822) onto a carcass drum (300) such that
• the transversal direction (ST) is parallel to the axis of rotation (AX) of the carcass drum (300),
• the first ply material (812) radially surrounds the second ply material (822),
• in a location, the direction to which the second cords (824) of the second ply material (822) extend forms a third angle (α3) with the direction to which the first cords (814) of the first ply material (812) extend, wherein the third angle (α3) is greater than the second angle (α2), and
• in the direction of the axis of rotation (AX), on both sides, the first ply material extends (812) in the direction of the axis of rotation (AX) outwardly from a boundary (826, 828) of the second ply material (822), thereby forming a cylindrical carcass preform (400),
- arranging two cables (152, 154) onto the cylindrical carcass preform (400), and
- turning the part of the cylindrical carcass preform (400) that is left in between a boundary (402, 404) of the cylindrical carcass preform (400) and the one of the two cables (152, 154) that is closer to the boundary (402, 404) of the cylindrical carcass preform (400) about the closer cable (152, 154) onto the part of the cylindrical carcass preform (400) that is left in between the two cables (152, 154),
**characterized by**
- expanding the cylindrical carcass preform (400) to form an annular carcass (410) having, in a bead area (415), an inner (715) and an outer (716) layer of the first ply material (812) and an inner (725) and an outer (726) layer of the second ply material (822), wherein
- in a location of the bead area, the outer layer (726) of the second ply material (822) is the outermost layer and the inner layer (725) of the second ply material (822) is the innermost layer and
- in another location, that is tree from both the outer layer (726) of the second ply material and the outer layer (716) of the first ply material, the inner layer (715) of the first ply material (812) is the outermost layer of that location, and in that
- the second width (W2) is less than the first width (W1).

2. The method of claim 1, comprising
- using and winding such first ply material (812) that
- in the annular carcass (410), the inner layer (715) of the first ply material (812) makes a contact with an outer layer (716) of the first ply material (812) at all locations of a region (RA), wherein
- the region (RA) extends a first distance (d1) along the cylindrical carcass preform (400) in a substantially radial direction along a sidewall (132, 134) of the annular carcass (410), and
- the first distance (d1) is at least 5 mm.

3. The method of claim 1 or 2, wherein
- the first and/or second ply material (812, 822) comprises
• rubber and
• cords (814, 824), the cords (814, 824) comprising at least one of cotton, rayon, polyamide (Nylon), polyester, polyethylene terephthalate, and Poly-paraphenylene terephthalamide (Kevlar).

4. The method of any of the claims 1 to 3, wherein
- the second width (W2) is at least 10 mm less than the first width (W1); i.e. W1-W2 ≥ 10 mm.

5. The method of any of the claims 1 to 4, comprising
- using such a first ply material (812) and a second ply material (822) and winding the ply materials (812, 822) in such a way that
- in the annular carcass (410), the outer layer (716) of the first ply material (712) extends a second distance (d2) along a sidewall (132, 134) of the carcass (410) in the outward radial direction (+SR), from a boundary (727) of the outer layer (726) of the second ply material (722);
preferably,
- the second distance (d2) is at least 2 mm.

6. The method of any of the claims 1 to 5 comprising using such ply materials (812, 822) in such a way that
- at each location of the carcass, in the direction of the thickness of the carcass, the carcass comprises layers (715, 716, 725, 726) of ply material in such a way that
[A]
- the cords of each such layer (725, 726) of ply material that has only one neighbouring layer (715, 716) of ply material comprises first cords extending, at a location, within the layer (725, 726) in a first direction,
- the cords of the neighbouring layer of the layer (725, 726) of ply material comprises second cords extending, at the location, within the neighbouring layer in a second direction, wherein
- the second direction forms an angle with the first direction, and
[B]
- the cords each such layer (715, 716) of ply material that has two neighbouring layers (716, 725; 726, 715) of ply material comprises first cords extending, at a location, within first ply material of the layer (715, 716) in a first direction,
- the cords of a first neighbouring layer (716, 726) of the layer (715, 716) of ply material comprises second cords extending, at the location, within the first neighbouring layer (716, 726) in a second direction, and
- the cords of a second neighbouring layer (725, 715) of the layer (715, 716) of ply material comprises third cords extending, at the location, within the second neighbouring layer (725, 715) in a third direction,
wherein
- the layer (715, 716) of ply material is arranged, at the location, in between the first neighbouring layer (716, 726) and the second neighbouring layer (725, 715),
- the second direction forms an angle with the first direction, and
- the third direction forms an angle with the first direction.

7. A tyre (100) having a crown area (191), sidewalls (132, 134), and bead areas (142, 144, 415), the tyre comprising
- a carcass (410, 130) having first ply material (812) and second ply material (822) in such a way, that in the crown area (191), the first ply material (812) radially surrounds the second ply material (822), wherein
- the first ply material (812) comprises first cords (814) extending within the first ply material (812) in a first direction that depends on a location within the tyre (100), and in the crow area (191), the first direction forms a first angle (α1) with the direction of the axis of rotation (AX),
- the second ply material (822) comprises second cords (824) extending within the second ply material (822) in a second direction at the location within the crown area (191), the second direction forming a second angle (α2) with the direction of the axis of rotation (AX) and a third angle (α3) with the first direction, wherein
• in the crown area (191) the first ply material (812) is next to the second ply material (822) in the radial direction,
• the first angle (α1) is at most 10 degrees,
• the second angle (α2) is at most 10 degrees, and
• the third angle (α3) is greater than the second angle (α2), the tyre (100) further comprising
- a cable (152, 154) arranged in a bead area (142, 144, 415),
- in the bead area (142, 144, 415), an inner (715) and an outer (716) layer of the first ply material (812) and an inner (725) and an outer (726) layer of the second ply material (822), wherein
- in a location of the bead area, the outer layer (726) of the second ply material (822) is the outermost layer and the inner layer (725) of the second ply material (822) is the innermost layer, and
- the outer layer (716) of the first ply material (812) extends, along a sidewall (132, 134) in a substantially outward radial direction (+SR), from a boundary (727) of the outer layer (726) of the second ply material (822), a second distance (d2),
wherein
- in another location, that is free from both the outer layer (726) of the second ply material and the outer layer (716) of the first ply material, the inner layer (715) of the first ply material (812) is the outermost layer of that location, and
- the second distance (d2) is at least 2 mm.

8. The tyre (100) of claim 7, wherein
- the inner (715) layer of the first ply material (812) makes a contact with an outer (716) layer of the first ply material (812) at each point of an area (RA), wherein
- the area (RA) extends a first distance (d1) in a substantially radial direction along the sidewall (132, 134), and
- the first distance (d1) is at least 5 mm.

9. The tyre (100) of any of the claim 7 or 8, wherein
- at a location of the bead area (142, 144, 415), first cords (814) of the inner layer (715) of first ply material (812) extend in a third direction,
- at that location, first cords (814) of the outer layer (716) of first ply material (812) extend in a direction forming an angle with respect to the third direction; preferably,
- the first cords (814) of the outer layer (716) of first ply material (812) extend in a direction forming an angle at least 1 degree with respect to the third direction.

10. The tyre (100) of any of the claims 7 to 9, wherein
- the material (812, 814) of the first and/or second ply comprises
• rubber and
• cords (814, 824), the cords (814, 824) comprising at least one of cotton, rayon, polyamide (Nylon), polyester, polyethylene terephthalate, and Poly-paraphenylene terephthalamide (Kevlar).

11. The tyre (100) of any of the claims 7 to 10, wherein
- at each location of the carcass, in the direction of the thickness of the carcass, the carcass comprises layers (715, 716, 725, 726) of ply material in such a way that
[A]
- the cords of each such layer (725, 726) of ply material that has only one neighbouring layer (715, 716) of ply material comprises first cords extending, at a location, within the layer (725, 726) in a first direction,
- the cords of the neighbouring layer of the layer (725, 726) of ply material comprises second cords extending, at the location, within the neighbouring layer in a second direction, wherein
- the second direction forms an angle with the first direction, and
[B]
- the cords each such layer (715, 716) of ply material that has two neighbouring layers (716, 725; 726, 715) of ply material comprises first cords extending, at a location, within first ply material of the layer (715, 716) in a first direction,
- the cords of a first neighbouring layer (716, 726) of the layer (715, 716) of ply material comprises second cords extending, at the location, within the first neighbouring layer (716, 726) in a second direction, and
- the cords of a second neighbouring layer (725, 715) of the layer (715, 716) of ply material comprises third cords extending, at the location, within the second neighbouring layer (725, 715) in a third direction,
wherein
- the layer (715, 716) of ply material is arranged, at the location, in between the first neighbouring layer (716, 726) and the second neighbouring layer (725, 715),
- the second direction forms an angle with the first direction, and
- the third direction forms an angle with the first direction.

## Patentansprüche

1. Verfahren zur Herstellung einer ringförmigen Karkasse (410) eines Reifens (100), wobei das Verfahren Folgendes umfasst:
- Bereitstellen eines ersten Lagenmaterials (812), wobei das erste Lagenmaterial (812) sich in einer Längsrichtung (SL) erstreckt, eine erste Breite (W1) in einer Querrichtung (ST) senkrecht zur Längsrichtung (SL) aufweist und erste Korde (814) umfasst, die sich in einer Richtung erstrecken, die einen ersten Winkel (α1) von höchstens 10 Grad mit der Querrichtung (ST) bildet,
- Bereitstellen eines zweiten Lagenmaterials (822) neben dem ersten Lagenmaterial (812), wobei das zweite Lagenmaterial (822) sich in der Längsrichtung (SL) erstreckt, eine zweite Breite (W2) in der Querrichtung (ST) aufweist und zweite Korde (824) umfasst, die sich in einer Richtung erstrecken, die einen zweiten Winkel (α2) von höchstens 10 Grad mit der Querrichtung (ST) bildet,
- Wickeln von zumindest einer Schicht des ersten Lagenmaterials (812) und einer Schicht des zweiten Lagenmaterials (822) auf eine Karkasstrommel (300) derart, dass
• die Querrichtung (ST) parallel zur Drehachse (AX) der Karkasstrommel (300) ist,
• das erste Lagenmaterial (812) das zweite Lagenmaterial (822) radial umgibt,
• an einer Stelle die Richtung, in welcher die zweiten Korde (824) des zweiten Lagenmaterials (822) sich erstrecken, einen dritten Winkel (α3) mit der Richtung, in welche die ersten Korde (814) des ersten Lagenmaterials (812) sich erstrecken, bildet, wobei der dritte Winkel (α3) größer als der zweite Winkel (α2) ist, und
• in der Richtung der Drehachse (AX) auf beiden Seiten das erste Lagenmaterial (812) sich in der Richtung der Drehachse (AX) nach außen von einer Begrenzung (826, 828) des zweiten Lagenmaterials (822) aus erstreckt, wodurch ein zylindrischer Karkassrohling (400) gebildet wird,
- Anordnen von zwei Seilen (152, 154) auf dem zylindrischen Karkassrohling (400) und
- Drehen des Teils des zylindrischen Karkassrohlings (400), der zwischen einer Begrenzung (402, 404) des zylindrischen Karkassrohlings (400) und dem einen der zwei Seile (152, 154), das der Begrenzung (402, 404) des zylindrischen Karkassrohlings (400) näher ist, verbleibt, um das nähere Seil (152, 154) herum auf den Teil des zylindrischen Karkassrohlings (400), der zwischen den zwei Seilen (152, 154) verbleibt,
**gekennzeichnet durch**
- Expandieren des zylindrischen Karkassrohlings (400), um eine ringförmige Karkasse (410) zu bilden, die in einem Wulstbereich (415) eine innere (715) und eine äußere (716) Schicht des ersten Lagenmaterials (812) und eine innere (725) und eine äußere (726) Schicht des zweiten Lagenmaterials (822) aufweist, wobei
- an einer Stelle des Wulstbereichs die äußere Schicht (726) des zweiten Lagenmaterials (822) die äußerste Schicht ist und die innere Schicht (725) des zweiten Lagenmaterials (822) die innerste Schicht ist und
- an einer anderen Stelle, die frei von der äußeren Schicht (726) des zweiten Lagenmaterials und der äußeren Schicht (716) des ersten Lagenmaterials ist, die innere Schicht (715) des ersten Lagenmaterials (812) die äußerste Schicht dieser Stelle ist, und **dadurch, dass**
- die zweite Breite (W2) kleiner als die erste Breite (W1) ist.

2. Verfahren nach Anspruch 1, umfassend:
- Verwenden und Wickeln eines solchen ersten Lagenmaterials (812) derart, dass
- in der ringförmigen Karkasse (410) die innere Schicht (715) des ersten Lagenmaterials (812) eine äußere Schicht (716) des ersten Lagenmaterials (812) an allen Stellen einer Region (RA) berührt, wobei
- die Region (RA) sich um eine erste Strecke (d1) entlang des zylindrischen Karkassrohlings (400) in einer im Wesentlichen radialen Richtung entlang einer Seitenwand (132, 134) der ringförmigen Karkasse (410) erstreckt und
- die erste Strecke (d1) mindestens 5 mm beträgt.

3. Verfahren nach Anspruch 1 oder 2, wobei
- das erste und/oder zweite Lagenmaterial (812, 822) Folgendes umfasst:
• Gummi und
• Korde (814, 824), wobei die Korde (814, 824) mindestens eines von Baumwolle, Rayon, Polyamid (Nylon), Polyester, Polyethylenterephthalat und Polyparaphenylenterephthalamid (Kevlar) umfassen.

4. Verfahren nach irgendeinem der Ansprüche 1 bis 3, wobei
- die zweite Breite (W2) um mindestens 10 mm kleiner als die erste Breite (W1) ist; d. h. W1 - W2 ≥ 10 mm.

5. Verfahren nach irgendeinem der Ansprüche 1 bis 4, umfassend
- Verwenden eines solchen ersten Lagenmaterials (812) und eines solchen zweiten Lagenmaterials (822) und Wickeln der Lagenmaterialien (812, 822) derart, dass
- in der ringförmigen Karkasse (410) die äußere Schicht (716) des ersten Lagenmaterials (712) sich um eine zweite Strecke (d2) entlang einer Seitenwand (132, 134) der Karkasse (410) in der nach außen radialen Richtung (+SR) von einer Begrenzung (727) der äußeren Schicht (726) des zweiten Lagenmaterials (722) aus erstreckt;
wobei vorzugsweise
- die zweite Strecke (d2) mindestens 2 mm beträgt.

6. Verfahren nach irgendeinem der Ansprüche 1 bis 5, umfassend das Verwenden solcher Lagenmaterialien (812, 822) derart, dass
- an jeder Stelle der Karkasse in der Richtung der Dicke der Karkasse die Karkasse Schichten (715, 716, 725, 726) von Lagenmaterial derart umfasst, dass
[A]
- die Korde jeder solchen Schicht (725, 726) von Lagenmaterial, die nur eine benachbarte Schicht (715, 716) von Lagenmaterial aufweist, erste Korde umfassen, die sich an einer Stelle innerhalb der Schicht (725, 726) in einer ersten Richtung erstrecken,
- die Korde der benachbarten Schicht der Schicht (725, 726) von Lagenmaterial zweite Korde umfassen, die sich an der Stelle innerhalb der benachbarten Schicht in einer zweiten Richtung erstrecken, wobei
- die zweite Richtung einen Winkel mit der ersten Richtung bildet, und [B]
- die Korde jeder solchen Schicht (715, 716) von Lagenmaterial, die zwei benachbarte Schichten (716, 725; 726, 715) von Lagenmaterial aufweist, erste Korde umfassen, die sich an einer Stelle innerhalb des ersten Lagenmaterials der Schicht (715, 716) in einer ersten Richtung erstrecken,
- die Korde einer ersten benachbarten Schicht (716, 726) der Schicht (715, 716) von Lagenmaterial zweite Korde umfassen, die sich an der Stelle innerhalb der ersten benachbarten Schicht (716, 726) in einer zweiten Richtung erstrecken, und
- die Korde einer zweiten benachbarten Schicht (725, 715) der Schicht (715, 716) von Lagenmaterial dritte Korde umfassen, die sich an der Stelle innerhalb der zweiten benachbarten Schicht (725, 715) in einer dritten Richtung erstrecken,
wobei
- die Schicht (715, 716) von Lagenmaterial an der Stelle zwischen der ersten benachbarten Schicht (716, 726) und der zweiten benachbarten Schicht (725, 715) angeordnet ist,
- die zweite Richtung einen Winkel mit der ersten Richtung bildet und
- die dritte Richtung einen Winkel mit der ersten Richtung bildet.

7. Reifen (100) mit einem Laufflächenkronenbereich (191), Seitenwänden (132, 134) und Wulstbereichen (142, 144, 415), wobei der Reifen Folgendes umfasst:
- eine Karkasse (410, 130), die ein erstes Lagenmaterial (812) und ein zweites Lagenmaterial (822) derart aufweist, dass im Laufflächenkronenbereich (191) das erste Lagenmaterial (812) das zweite Lagenmaterial (822) radial umgibt, wobei
- das erste Lagenmaterial (812) erste Korde (814) umfasst, die sich innerhalb des ersten Lagenmaterials (812) in einer ersten Richtung erstrecken, die von einer Stelle innerhalb des Reifens (100) abhängt, und, im Laufflächenkronenbereich (191), die erste Richtung einen ersten Winkel (α1) mit der Richtung der Drehachse (AX) bildet,
- das zweite Lagenmaterial (822) zweite Korde (824) umfasst, die sich innerhalb des zweiten Lagenmaterials (822) in einer zweiten Richtung an der Stelle innerhalb des Laufflächenkronenbereichs (191) erstrecken, wobei die zweite Richtung einen zweiten Winkel (α2) mit der Richtung der Drehachse (AX) und einen dritten Winkel (α3) mit der ersten Richtung bildet, wobei
• im Laufflächenkronenbereich (191) das erste Lagenmaterial (812) sich in der radialen Richtung neben dem zweiten Lagenmaterial (822) befindet,
• der erste Winkel (α1) höchstens 10 Grad beträgt,
• der zweite Winkel (α2) höchstens 10 Grad beträgt und
• der dritte Winkel (α3) größer als der zweite Winkel (α2) ist, wobei der Reifen (100) ferner Folgendes umfasst:
- ein Seil (152, 154), das in einem Wulstbereich (142, 144, 415) angeordnet ist,
- im Wulstbereich (142, 144, 415) eine innere (715) und eine äußere (716) Schicht des ersten Lagenmaterials (812) und eine innere (725) und eine äußere (726) Schicht des zweiten Lagenmaterials (822) vorhanden sind, wobei
- an einer Stelle des Wulstbereichs die äußere Schicht (726) des zweiten Lagenmaterials (822) die äußerste Schicht ist und die innere Schicht (725) des zweiten Lagenmaterials (822) die innerste Schicht ist und
- die äußere Schicht (716) des ersten Lagenmaterials (812) sich um eine zweite Strecke (d2) entlang einer Seitenwand (132, 134) in einer im Wesentlichen nach außen radialen Richtung (+SR) von einer Begrenzung (727) der äußeren Schicht (726) des zweiten Lagenmaterials (822) aus erstreckt,
wobei
- an einer anderen Stelle, die frei von der äußeren Schicht (726) des zweiten Lagenmaterials und der äußeren Schicht (716) des ersten Lagenmaterials ist, die innere Schicht (715) des ersten Lagenmaterials (812) die äußerste Schicht dieser Stelle ist, und
- die zweite Strecke (d2) mindestens 2 mm beträgt.

8. Reifen (100) nach Anspruch 7, wobei
- die innere (715) Schicht des ersten Lagenmaterials (812) eine äußere (716) Schicht des ersten Lagenmaterials (812) an jeder Stelle eines Bereichs (RA) berührt,
wobei
- der Bereich (RA) sich um eine erste Strecke (d1) in einer im Wesentlichen radialen Richtung entlang der Seitenwand (132, 134) erstreckt und
- die erste Strecke (d1) mindestens 5 mm beträgt.

9. Reifen (100) nach irgendeinem der Ansprüche 7 oder 8, wobei
- an einer Stelle des Wulstbereichs (142, 144, 415) erste Korde (814) der inneren Schicht (715) des ersten Lagenmaterials (812) sich in einer dritten Richtung erstrecken,
- an dieser Stelle erste Korde (814) der äußeren Schicht (716) des ersten Lagenmaterials (812) sich in einer Richtung erstrecken, die einen Winkel in Bezug auf die dritte Richtung bilden;
vorzugsweise
- die ersten Korde (814) der äußeren Schicht (716) des ersten Lagenmaterials (812) sich in einer Richtung erstrecken, die einen Winkel von mindestens 1 Grad in Bezug auf die dritte Richtung bilden.

10. Reifen (100) nach irgendeinem der Ansprüche 7 bis 9, wobei
- das Material (812, 814) der ersten und/oder zweiten Lage Folgendes umfasst:
• Gummi und
• Korde (814, 824), wobei die Korde (814, 824) mindestens eines von Baumwolle, Rayon, Polyamid (Nylon), Polyester, Polyethylenterephthalat und Polyparaphenylenterephthalamid (Kevlar) umfassen.

11. Reifen (100) nach irgendeinem der Ansprüche 7 bis 10, wobei
- an jeder Stelle der Karkasse in der Richtung der Dicke der Karkasse die Karkasse Schichten (715, 716, 725, 726) von Lagenmaterial derart umfasst, dass
[A]
- die Korde jeder solchen Schicht (725, 726) von Lagenmaterial, die nur eine benachbarte Schicht (715, 716) von Lagenmaterial aufweist, erste Korde umfassen, die sich an einer Stelle innerhalb der Schicht (725, 726) in einer ersten Richtung erstrecken,
- die Korde der benachbarten Schicht der Schicht (725, 726) von Lagenmaterial zweite Korde umfassen, die sich an der Stelle innerhalb der benachbarten Schicht in einer zweiten Richtung erstrecken, wobei
- die zweite Richtung einen Winkel mit der ersten Richtung bildet, und [B]
- die Korde jeder solchen Schicht (715, 716) von Lagenmaterial, die zwei benachbarte Schichten (716, 725; 726, 715) von Lagenmaterial aufweist, erste Korde umfassen, die sich an einer Stelle innerhalb des ersten Lagenmaterials der Schicht (715, 716) in einer ersten Richtung erstrecken,
- die Korde einer ersten benachbarten Schicht (716, 726) der Schicht (715, 716) von Lagenmaterial zweite Korde umfassen, die sich an der Stelle innerhalb der ersten benachbarten Schicht (716, 726) in einer zweiten Richtung erstrecken, und
- die Korde einer zweiten benachbarten Schicht (725, 715) der Schicht (715, 716) von Lagenmaterial dritte Korde umfassen, die sich an der Stelle innerhalb der zweiten benachbarten Schicht (725, 715) in einer dritten Richtung erstrecken,
wobei
- die Schicht (715, 716) von Lagenmaterial an der Stelle zwischen der ersten benachbarten Schicht (716, 726) und der zweiten benachbarten Schicht (725, 715) angeordnet ist,
- die zweite Richtung einen Winkel mit der ersten Richtung bildet und
- die dritte Richtung einen Winkel mit der ersten Richtung bildet.

## Revendications

1. Procédé de fabrication d'une carcasse annulaire (410) d'un pneumatique (100), le procédé comprenant
- fournir un premier matériau de pli (812), le premier matériau de pli (812) s'étendant dans une direction longitudinale (SL), ayant une première largeur (W1) dans une direction transversale (ST) perpendiculaire à la direction longitudinale (SL), et comprenant des premiers câblés (814) s'étendant dans une direction formant un premier angle (α1) d'au plus 10 degrés avec la direction transversale (ST),
- fournir un deuxième matériau de pli (822) à côté du premier matériau de pli (812), le deuxième matériau de pli (822) s'étendant dans la direction longitudinale (SL), ayant une deuxième largeur (W2) dans la direction transversale (ST), et comprenant des deuxièmes câblés (824) s'étendant dans une direction formant un deuxième angle (α2) d'au plus 10 degrés avec la direction transversale (ST),
- enrouler au moins une couche du premier matériau de pli (812) et une couche du deuxième matériau de pli (822) sur un tambour de carcasse (300) de sorte que
• la direction transversale (ST) soit parallèle à l'axe de rotation (AX) du tambour de carcasse (300),
• le premier matériau de pli (812) entoure radialement le deuxième matériau de pli (822),
• à un emplacement, la direction dans laquelle s'étendent les deuxièmes câblés (824) du deuxième matériau de pli (822) forme un troisième angle (α3) avec la direction dans laquelle s'étendent les premiers câblés (814) du premier matériau de pli (812), dans lequel le troisième angle (α3) est supérieur au deuxième angle (α2), et
• dans la direction de l'axe de rotation (AX), de part et d'autre, le premier matériau de pli (812) s'étend dans la direction de l'axe de rotation (AX) vers l'extérieur à partir d'une limite (826, 828) du deuxième matériau de pli (822), formant ainsi une préforme de carcasse cylindrique (400),
- agencer deux câbles (152, 154) sur la préforme de carcasse cylindrique (400), et
- faire tourner la partie de la préforme de carcasse cylindrique (400) qui est laissée entre une limite (402, 404) de la préforme de carcasse cylindrique (400) et l'un des deux câbles (152, 154) qui est plus proche de la limite (402, 404) de la préforme de carcasse cylindrique (400) autour du câble le plus proche (152, 154) sur la partie de la préforme de carcasse cylindrique (400) qui est laissée entre les deux câbles (152, 154),
**caractérisé par**
- dilater la préforme de carcasse cylindrique (400) pour former une carcasse annulaire (410) ayant, dans une zone de talon (415), une couche interne (715) et une couche externe (716) du premier matériau de pli (812) et une couche interne (725) et une couche externe (726) du deuxième matériau de pli (822), dans lequel
- dans un emplacement de la zone de talon, la couche externe (726) du deuxième matériau de pli (822) est la couche la plus à l'extérieur et la couche interne (725) du deuxième matériau de pli (822) est la couche la plus à l'intérieur et
- dans un autre emplacement, qui est dépourvu à la fois de la couche externe (726) du deuxième matériau de pli et de la couche externe (716) du premier matériau de pli, la couche interne (715) du premier matériau de pli (812) est la couche la plus à l'extérieur de cet emplacement, et en ce que
- la deuxième largeur (W2) est inférieure à la première largeur (W1).

2. Procédé de la revendication 1, comprenant
- utiliser et enrouler le premier matériau de pli (812) de sorte que
- dans la carcasse annulaire (410), la couche interne (715) du premier matériau de pli (812) établisse un contact avec une couche externe (716) du premier matériau de pli (812) à tous les emplacements d'une région (RA), dans lequel
- la région (RA) s'étend sur une première distance (d1) le long de la préforme de carcasse cylindrique (400) dans une direction sensiblement radiale le long d'un flanc (132, 134) de la carcasse annulaire (410), et
- la première distance (d1) est d'au moins 5 mm.

3. Procédé de la revendication 1 ou 2, dans lequel
- le(s) premier et/ou deuxième matériau(x) de pli (812, 822) comprend/comprennent
• du caoutchouc et
• des câblés (814, 824), les câblés (814, 824) comprenant au moins l'un(e) parmi le coton, la rayonne, le polyamide (Nylon), le polyester, le polyéthylène téréphtalate et le poly-paraphénylène téréphtalamide (Kevlar).

4. Procédé de l'une des revendications 1 à 3, dans lequel
- la deuxième largeur (W2) est inférieure d'au moins 10 mm à la première largeur (W1) ; c'est-à-dire W1-W2 ≥ 10 mm.

5. Procédé de l'une des revendications 1 à 4, comprenant
- utiliser un tel premier matériau de pli (812) et un tel deuxième matériau de pli (822) et enrouler les matériaux de pli (812, 822) de manière à ce que
- dans la carcasse annulaire (410), la couche externe (716) du premier matériau de pli (712) s'étende sur une deuxième distance (d2) le long d'un flanc (132, 134) de la carcasse (410) dans la direction radiale vers l'extérieur (+SR), à partir d'une limite (727) de la couche externe (726) du deuxième matériau de pli (722) ;
de préférence,
- la deuxième distance (d2) est d'au moins 2 mm.

6. Procédé de l'une des revendications 1 à 5, comprenant l'utilisation de tels matériaux de pli (812, 822) de manière à ce que
- à chaque emplacement de la carcasse, dans la direction de l'épaisseur de la carcasse, la carcasse comprenne des couches (715, 716, 725, 726) de matériau de pli de manière à ce que
[A]
- les câblés de chacune de ces couches (725, 726) de matériau de pli qui n'a qu'une seule couche voisine (715, 716) de matériau de pli comprennent des premiers câblés s'étendant, à un emplacement, à l'intérieur de la couche (725, 726) dans une première direction,
- les câblés de la couche voisine de la couche (725, 726) de matériau de pli comprennent des deuxièmes câblés s'étendant, à l'emplacement, à l'intérieur de la couche voisine dans une deuxième direction, dans lequel
- la deuxième direction forme un angle avec la première direction, et
[B]
- les câblés de chacune de ces couches (715, 716) de matériau de pli qui a deux couches voisines (716, 725 ; 726, 715) de matériau de pli comprennent des premiers câblés s'étendant, à un emplacement, à l'intérieur du premier matériau de pli de la couche (715, 716) dans une première direction,
- les câblés d'une première couche voisine (716, 726) de la couche (715, 716) de matériau de pli comprennent des deuxièmes câblés s'étendant, à l'emplacement, à l'intérieur de la première couche voisine (716, 726) dans une deuxième direction, et
- les câblés d'une deuxième couche voisine (725, 715) de la couche (715, 716) de matériau de pli comprennent des troisièmes câblés s'étendant, à l'emplacement, à l'intérieur de la deuxième couche voisine (725, 715) dans une troisième direction,
dans lequel
- la couche (715, 716) de matériau de pli est agencée, à l'emplacement, entre la première couche voisine (716, 726) et la deuxième couche voisine (725, 715),
- la deuxième direction forme un angle avec la première direction, et
- la troisième direction forme un angle avec la première direction.

7. Pneumatique (100) ayant une zone de sommet (191), des flancs (132, 134) et des zones de talon (142, 144, 415), le pneumatique comprenant
- une carcasse (410, 130) ayant un premier matériau de pli (812) et un deuxième matériau de pli (822) de manière à ce que, dans la zone de sommet (191), le premier matériau de pli (812) entoure radialement le deuxième matériau de pli (822), dans lequel
- le premier matériau de pli (812) comprend des premiers câblés (814) s'étendant à l'intérieur du premier matériau de pli (812) dans une première direction qui dépend d'un emplacement à l'intérieur du pneumatique (100), et dans la zone de sommet (191), la première direction forme un premier angle (α1) avec la direction de l'axe de rotation (AX),
- le deuxième matériau de pli (822) comprend des deuxièmes câblés (824) s'étendant à l'intérieur du deuxième matériau de pli (822) dans une deuxième direction à l'emplacement à l'intérieur de la zone de sommet (191), la deuxième direction formant un deuxième angle (α2) avec la direction de l'axe de rotation (AX) et un troisième angle (α3) avec la première direction, dans lequel
• dans la zone de sommet (191), le premier matériau de pli (812) est à côté du deuxième matériau de pli (822) dans la direction radiale,
• le premier angle (α1) est d'au plus 10 degrés,
• le deuxième angle (α2) est d'au plus 10 degrés, et
• le troisième angle (α3) est supérieur au deuxième angle (v2),
le pneumatique (100) comprenant en outre
- un câble (152, 154) agencé dans une zone de talon (142, 144, 415),
- dans la zone de talon (142, 144, 415), une couche interne (715) et une couche externe (716) du premier matériau de pli (812) et une couche interne (725) et une couche externe (726) du deuxième matériau de pli (822), dans lequel
- dans un emplacement de la zone de talon, la couche externe (726) du deuxième matériau de pli (822) est la couche la plus à l'extérieur et la couche interne (725) du deuxième matériau de pli (822) est la couche la plus à l'intérieur, et
- la couche externe (716) du premier matériau de pli (812) s'étend, le long d'un flanc (132, 134) dans une direction radiale sensiblement vers l'extérieur (+SR), à partir d'une limite (727) de la couche externe (726) du deuxième matériau de pli (822), sur une deuxième distance (d2),
dans lequel
- dans un autre emplacement, qui est dépourvu à la fois de la couche externe (726) du deuxième matériau de pli et de la couche externe (716) du premier matériau de pli, la couche interne (715) du premier matériau de pli (812) est la couche la plus à l'extérieur de cet emplacement, et
- la deuxième distance (d2) est d'au moins 2 mm.

8. Pneumatique (100) de la revendication 7, dans lequel
- la couche interne (715) du premier matériau de pli (812) établit un contact avec une couche externe (716) du premier matériau de pli (812) en chaque point d'une zone (RA),
dans lequel
- la zone (RA) s'étend sur une première distance (d1) dans une direction sensiblement radiale le long du flanc (132, 134), et
- la première distance (d1) est d'au moins 5 mm.

9. Pneumatique (100) de l'une des revendications 7 ou 8, dans lequel
- à un emplacement de la zone de talon (142, 144, 415), des premiers câblés (814) de la couche interne (715) de premier matériau de pli (812) s'étendent dans une troisième direction,
- à cet emplacement, des premiers câblés (814) de la couche externe (716) de premier matériau de pli (812) s'étendent dans une direction formant un angle par rapport à la troisième direction ;
de préférence,
- les premiers câblés (814) de la couche externe (716) de premier matériau de pli (812) s'étendent dans une direction formant un angle d'au moins 1 degré par rapport à la troisième direction.

10. Pneumatique (100) de l'une des revendications 7 à 9, dans lequel
- le matériau (812, 814) du premier et/ou deuxième pli comprend
• du caoutchouc et
• des câblés (814, 824), les câblés (814, 824) comprenant au moins l'un(e) parmi le coton, la rayonne, le polyamide (Nylon), le polyester, le polyéthylène téréphtalate et le poly-paraphénylène téréphtalamide (Kevlar).

11. Pneumatique (100) de l'une des revendications 7 à 10, dans lequel
- à chaque emplacement de la carcasse, dans la direction de l'épaisseur de la carcasse, la carcasse comprend des couches (715, 716, 725, 726) de matériau de pli de manière à ce que
[A]
- les câblés de chacune de ces couches (725, 726) de matériau de pli qui n'a qu'une seule couche voisine (715, 716) de matériau de pli comprennent des premiers câblés s'étendant, à un emplacement, à l'intérieur de la couche (725, 726) dans une première direction,
- les câblés de la couche voisine de la couche (725, 726) de matériau de pli comprennent des deuxièmes câblés s'étendant, à l'emplacement, à l'intérieur de la couche voisine dans une deuxième direction, dans lequel
- la deuxième direction forme un angle avec la première direction, et
[B]
- les câblés de chacune de ces couches (715, 716) de matériau de pli qui a deux couches voisines (716, 725 ; 726, 715) de matériau de pli comprennent des premiers câblés s'étendant, à un emplacement, à l'intérieur du premier matériau de pli de la couche (715, 716) dans une première direction,
- les câblés d'une première couche voisine (716, 726) de la couche (715, 716) de matériau de pli comprennent des deuxièmes câblés s'étendant, à l'emplacement, à l'intérieur de la première couche voisine (716, 726) dans une deuxième direction, et
- les câblés d'une deuxième couche voisine (725, 715) de la couche (715, 716) de matériau de pli comprennent des troisièmes câblés s'étendant, à l'emplacement, à l'intérieur de la deuxième couche voisine (725, 715) dans une troisième direction,
dans lequel
- la couche (715, 716) de matériau de pli est agencée, à l'emplacement, entre la première couche voisine (716, 726) et la deuxième couche voisine (725, 715),
- la deuxième direction forme un angle avec la première direction, et
- la troisième direction forme un angle avec la première direction.
